# EUROPEAN PATENT SPECIFICATION

(11) **EP 2 965 712 B1**
(45) Date of publication and mention of the grant of the patent: **30.01.2019**
(21) Application number: 14175931.6
(22) Date of filing: 07.07.2014
(51) Int. Cl.: A61C 13/00, B23Q 3/06

(54) **Improved device for supporting preformed elements for producing single superstructures for dental prostheses and system for supporting this device on the processing machine of said preformed elements**
Verbesserte Vorrichtung zur Unterstützung von vorgeformten Elementen zur Herstellung einzelner Superstrukturen für Zahnprothesen und System zur Unterstützung dieser Vorrichtung auf der Bearbeitungsmaschine der vorgeformten Elemente
Dispositif amélioré pour supporter des éléments préformés afin de produire des superstructures uniques pour prothèses dentaires et système de support de ce dispositif sur la machine de traitement desdits éléments préformés

(43) Date of publication of application: 13.01.2016
(73) Proprietor: Kulzer GmbH, 63450 Hanau (DE)
(72) Inventor: Piasini, Bruno, 23020 Montaqgna in Valtellina (Sondrio) (IT); Scotti, Antonio Maria, 20900 Monza e Brianza (IT)
(74) Representative: Martegani, Franco

(56) References cited:
- KR-B1- 101 334 524
- US-A1- 2004 241 464
- US-A1- 2009 130 634
- US-A1- 2012 214 133
- US-B1- 6 640 150

## Description

The present invention relates to a device of the improved type for supporting preformed elements used in the production of single superstructures for dental prosthesis. The invention also relates to the system for supporting this device on the processing machine of said preformed elements.

### Field of the invention

The field of the invention relates to systems used for producing single dental prostheses, starting from a preformed element which must be processed and shaped in a personalized manner, in order to obtain a single superstructure having the shape designed.

### Background of the invention

Known systems for producing single dental prostheses starting from a preformed element envisage fixing the latter on a supporting device. This fixing is, in particular, exclusively effected through the same type and size of the screw which serves for anchoring the superstructure to the implant in the patient's mouth, whose dimensions depend on those of the interface between the implant itself and the final superstructure. An example of such a system is disclosed in US 6,6640,150 B1.

For this reason, during the processing, normally by means of milling, of the preformed element of a metallic material (Ti alloys, Cr-Co and similia), axial loads are mainly used, i.e. those that the fixing screw of the preformed element to its supporting device is capable of sustaining. Side processing loads of the preformed element could in fact cause the breakage of this screw.

The problem is particularly felt in the case of superstructures having an interface on the implant with a very small diameter, which, in turn, requires the use of fixing screws equally as small and therefore with a poor mechanical resistance.

Consequently, traditional processings of preformed elements on the respective supporting means do not allow side loads to be applied, which, however, are necessary for processing the superstructures according to axes different from the axial axis.

### Summary of the invention

The main objective of the present invention is to provide a new device for supporting preformed elements for producing single structures of dental prostheses which, unlike the known devices of the same type, also allow these superstructures to be processed according to axes different from the axial axis (for example for the production of undercuts).

A further objective of the invention is to provide a system for supporting the above-mentioned supporting device on the machine for processing a preformed element, which holds the above-mentioned supporting device in its axial and angular reference position.

Another objective of the invention is to provide a supporting system of the above-mentioned type, which is universal with respect to the form and dimensions of the interface of the final superstructure on the corresponding supporting device.

These and other objectives are achieved by the supporting device and with the supporting system as claimed, respectively. Preferred embodiments of the invention are specified in the remaining claims.

With respect to known embodiments in the field, the device of the invention offers the advantage of also resisting side milling loads of the preformed element, for example for producing undercuts and, in particular, for processings below the emergency profile. Thanks to the device of the invention, in fact, the loads generated by side-oriented processings with respect to the preformed element are converted to axial or vertical forces, which even small-dimensioned screws used for fixing the preformed element to the same supporting device, are able to resist.

The invention also offers the advantage of providing a system for effectively supporting said device on the processing machine of preformed elements, with the possibility of also contemporaneously assembling various supporting devices, regardless of the form of the final interface between the implant in the mouth and relative superstructure.

The supporting device of the invention is according to claim 1 or 2, and the assembly comprising a supporting system and the device of claim 1 or 2 is according to claim 3.

### Brief description of the drawings

These and other objectives, advantages and characteristics appear evident from the following description of some preferred embodiments for producing the device and support of the invention illustrated, for illustrative and non-limiting purposes, in the figures of the enclosed drawings.

In these:
- figure 1 illustrates a longitudinal sectional view of a device of the known art for supporting preformed elements;
- figure 2 illustrates a longitudinal sectional view of the device of the invention for producing single superstructures for dental prostheses;
- figure 2A illustrates the enlarged detail A of figure 2;
- figure 3 illustrates the exploded perspective view of the detail of the supporting device of figure 2 complete with supporting nuts and preformed element;
- figures 4 and 5 illustrate an embodiment variant of the device of figure 3;
- figures 6 to 8 illustrate an example of the system of the invention for the single supporting of the device of figure 3; and
- figures 9 to 11 illustrate a further example of the system of the invention for the multiple supporting of the device of figure 3.

### Detailed description of the drawings

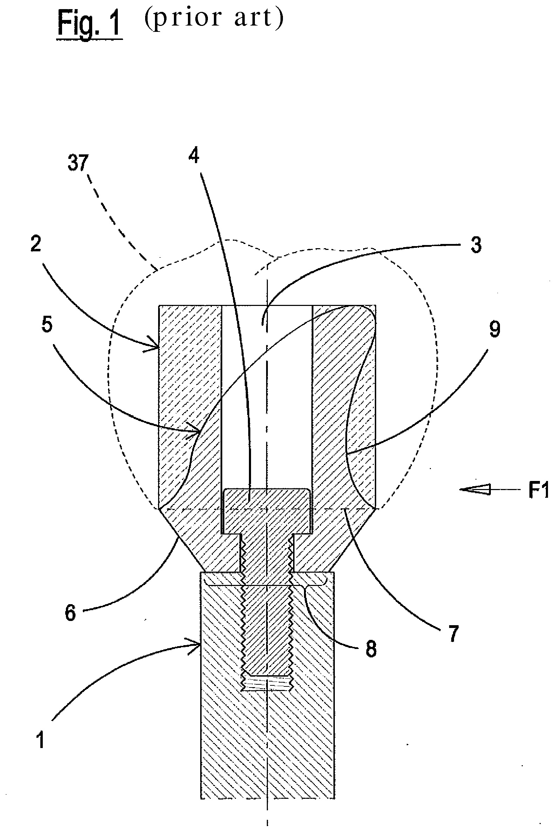

The device of the known art illustrated in figure 1 is composed of a supporting body 1 on which the preformed element 2 (metal alloy of Ti, Cr-Co and the like) is fixed, in whose axial hole 3 the fixing screw 4 of the same preformed element 2 is fixed to the above-mentioned supporting body 1.

As, in this known embodiment, the screw 4 entirely exerts the function of fixing the preformed element 2 to its support 1, side milling processing loads with respect to the longitudinal axis of this screw 4 (arrow F1 of figure 1) can cause breakage of the same screw. The smaller the dimension of the interface 8 of the implant and the dimension of the screws used for the final fixing of equally small superstructures 5 provided for supporting the corresponding dental element 37 on the implant in the mouth, the more frequent these breakages will be.

For this reason, the known system of figure 1, which is suitable for resisting axial loads, requires the use of preformed elements 2 which already have a joint 6 between the emergency profile 7 of the superstructure 5 and the interface of the same which is coupled with the interface 8 of the implant, having the final shape of the same superstructure as implanted in the mouth. For the same reason, the known art described herein, considerably limits the possibility of producing superstructures which have marked undercuts, such as that indicated with reference 9 in figure 1.

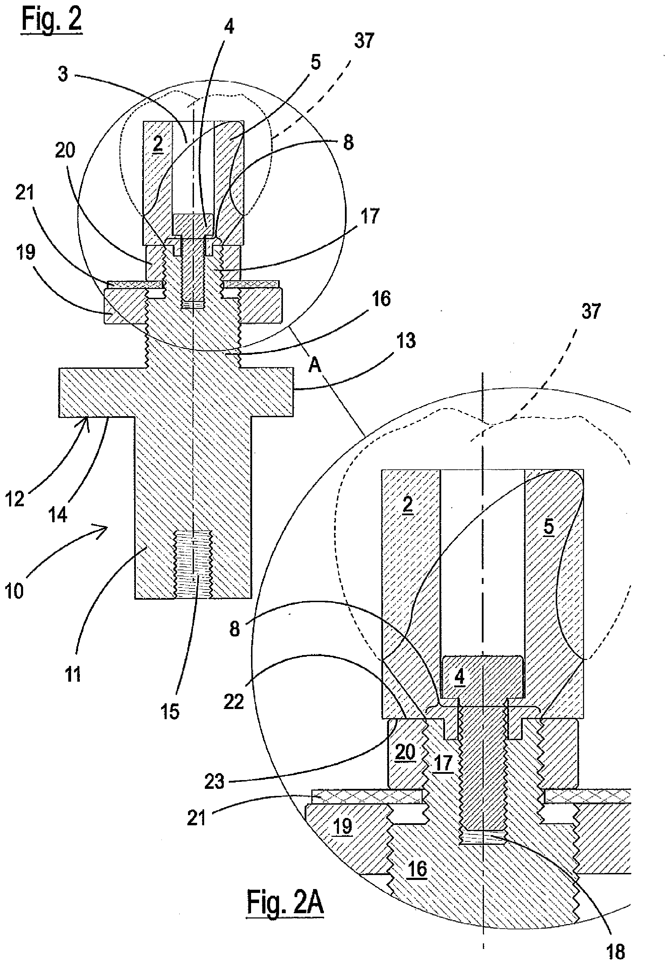

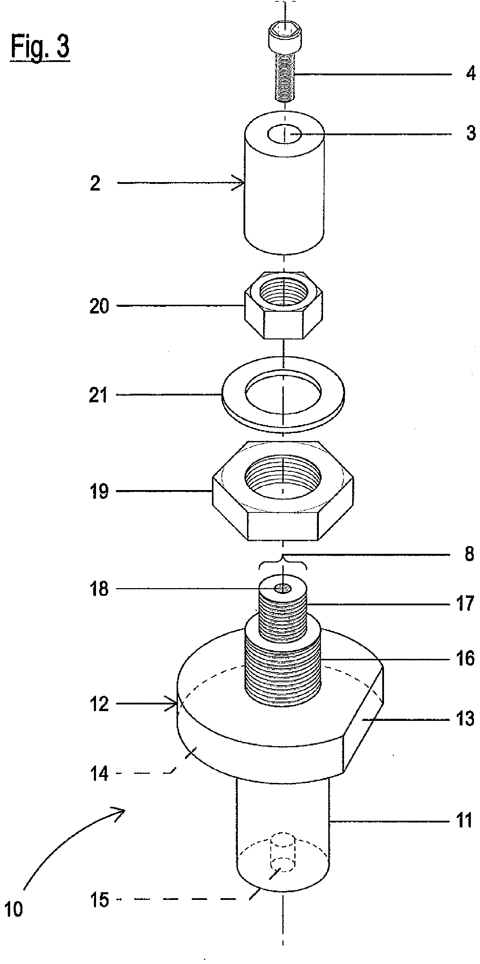

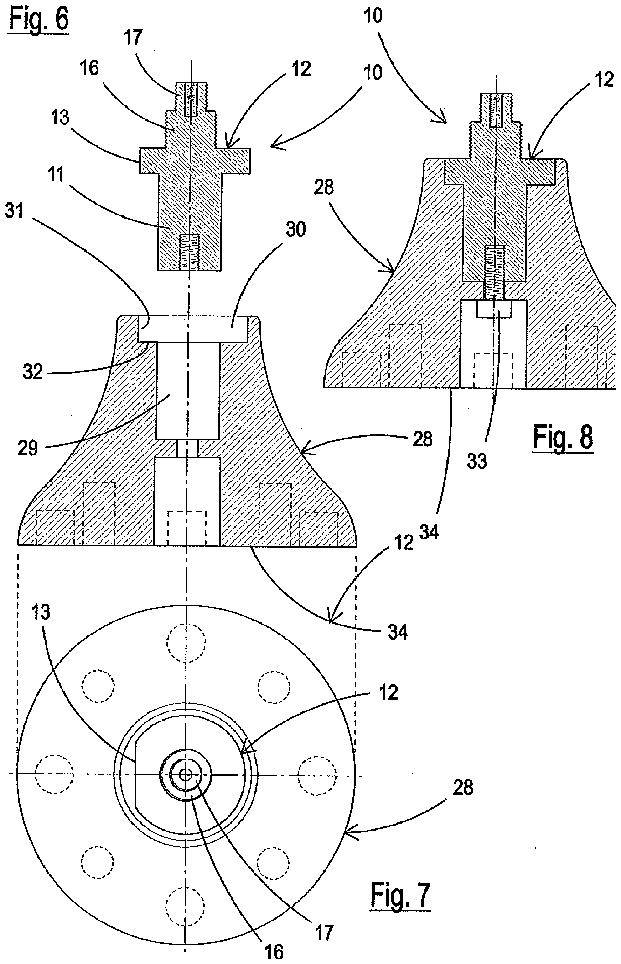

In order to overcome the drawbacks described above, the device 10 of figures 2 and 3 has been conceived, essentially consisting of a metallic body having, at the base, a shank 11 containing a threaded seat 15 for connection to the supporting system illustrated in figures 6-11.

A flange 12 is also envisaged on said shank 11, whose lower side 14 defines the reference in height of the device 10 with respect to the processing point zero on the milling machine. The circular edge of the same flange 12 is also provided with a section 13 of straight side surface which represents the angular position reference of the device 10.

On the opposite side of the shank 11, i.e. above the flange 12, a first threaded stem 16 and a second threaded stem 17 are envisaged, the latter having a smaller diameter with respect to the first stem 16 and with the same diameter as the interface 8, which is that of the interface of the implant in the mouth. For this purpose, the free end of the second stem 17 reproduces the form and dimension of the interface 8 of the implant in the mouth and is also provided with the hole 18 to receive the respective fixing screw 4.

According to the invention, and as better represented in the figures 2 and 2A, a first nut 19 is screwed onto the first threaded stem 16, whereas a second nut 20 is screwed onto the second threaded stem 17, after the possible interpositioning of a washer 21. The fixing of the preformed element 2 to the device 10 is therefore effected by engagement of the screw 4 in the hole 18 of the threaded stem 17. In this embodiment, the nut 19 exerts the role of stabilizing the second nut 20 and preventing it from becoming unscrewed in the milling operations of the preformed element.

Thanks to the invention, the preformed element 2 can be assembled onto the supporting device 10 without the necessity of previously forming the shape of the joint 6 of the preformed element of figure 1 of the known art on the same, as, according to the invention, the above joint can also be processed with the preformed element already assembled on its supporting device 10, thanks to the capacity of the latter of effectively resisting processings in a side direction.

According to the invention, in fact, the preformed element 2 can maintain its entire initial base surface 23 which, by resting on the corresponding surface 22 of the nut 20 and when added to that of the interface 8 defined by the plane of the free end of the stem 17, converts side forces into vertical forces, against which the screw 4 can effectively resist. Not only deep undercuts such as that 9 of figure 1, but also the same joint 6 according to the personalized shape designed, can therefore be obtained on the preformed element.

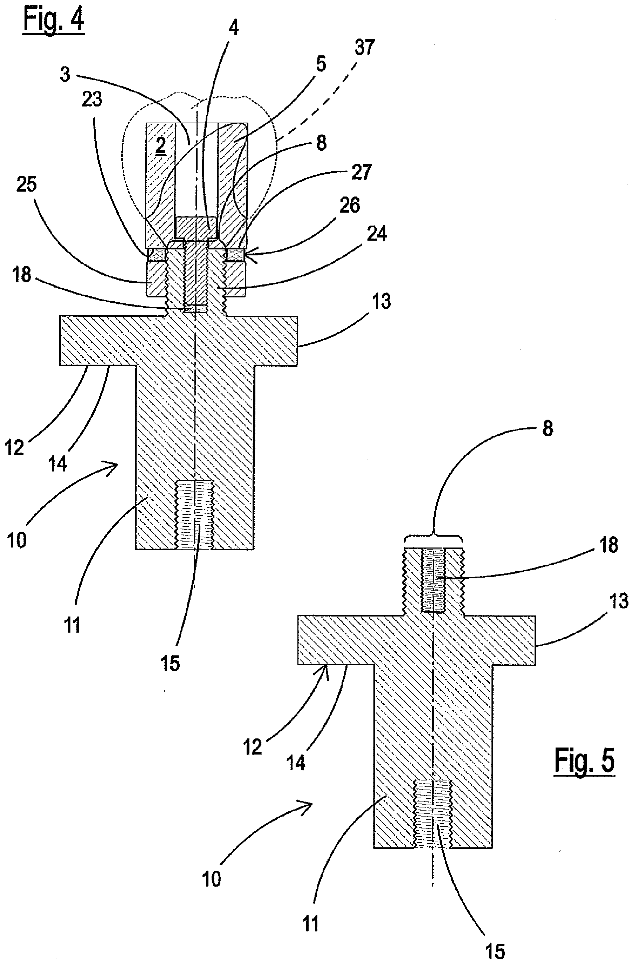

In the variant illustrated in figures 4 and 5, above the flange 12, there is a single stem 24 on which a nut 25 is screwed, in correspondence with the attachment base to said flange, which in turn supports a washer 26. The latter forms a surface 27 which, when added to that of the interface 8 defined by the plane of the free end of the stem 24, forms a more extensive surface which is capable of resisting side forces, as already described with reference to the embodiment of figure 2.

The fixing of the device 10 of the invention to the machine which effects the processing of the preformed element by milling, is obtained with the supporting system 28 illustrated in figure 6, which also represents an object of the present invention. For this purpose, the above supporting system 28 has a housing 29,30 for the shank 11 and for the flange 12, respectively, of the device 10. The angular orientation of the device 10 on the supporting system 28 is provided by the cooperation of the straight side surface 13 of the flange 12 with the corresponding abutment 31 of the above housing 30 (figures 6 and 7) . The vertical height of the same device 10 with respect to the zero of the milling machine is obtained, on the other hand, by resting the plane 32 of the same housing 30 beneath the lower side 14 of the flange 12. A screw 33 is also envisaged for fixing the device 10 to the support 28, which also has a fixing plane 34 to the above-mentioned milling machine.

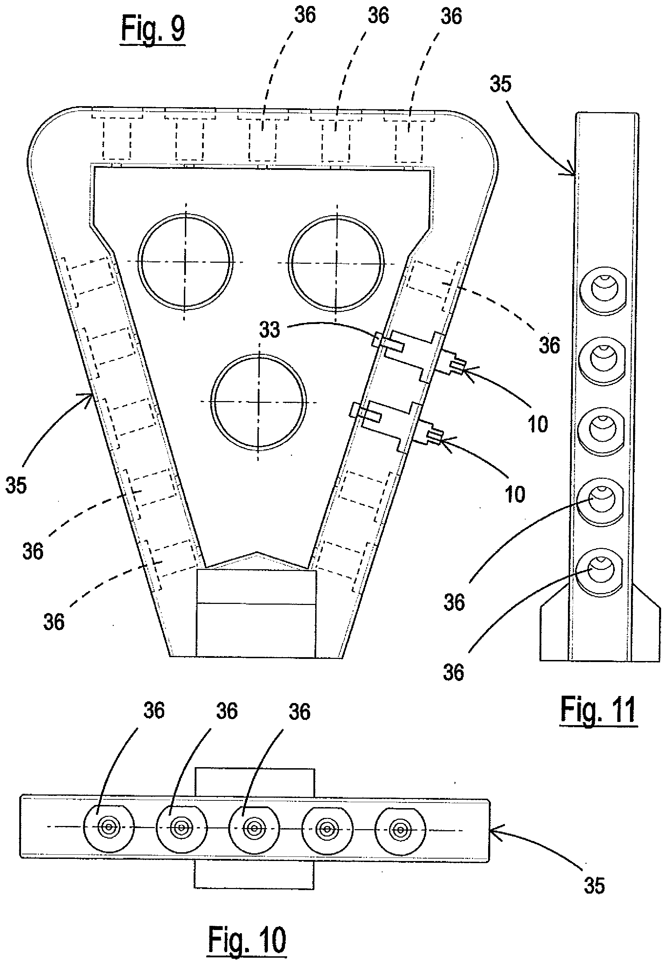

In the variant of figures 9 to 11, the supporting system of the invention is indicated with the reference number 35 and has a plurality of seats 36, each analogous to the above-mentioned housing 29, 30 of figure 6, for a corresponding number of supporting devices 10. It should be apparent to those skilled in the art that various additional objects and advantages have been attained by the invention and that a variety of modifications can be made within the scope of the present invention, being limited by the following appended claims only.

## Claims

1. A supporting device (10) for preformed elements (2) for producing single superstructures of dental prostheses anchored to a corresponding implant in the patient's mouth, said device (10) being supportable to a processing machine by means of a respective supporting system (28,35), wherein said supporting device (10) is of the type consisting of a supporting body, comprising an interface (8) for supporting a preformed element (2) with respect to the same supporting body, and a base opposite to said interface (8), wherein said device comprises:
- a shank (11), provided at the base of said device (10) and containing a threaded recess (15) for connection to said supporting system (28,35) of said device to the processing machine of said preformed element (2), and a flange (12) provided at its circular edge with a section (13) of the straight side surface which represents the angular position reference and the lower side (14) of said flange (12) defining the reference in height of the device (10) with respect to the processing point zero on the processing machine;
- a first threaded stem (16) for receiving a first nut (19) and a second threaded stem (17) for receiving a second nut (20) having a supporting surface (22) with respect to a surface (23) of the preformed element (2) to the above supporting body,
- said second threaded stem (17), for receiving said interface (8) identical to that of the implant in the mouth, having a free end (17) reproducing the form and dimension of said interface (8) of the implant in the mouth, said stem (17) being provided with a hole (18) to receive the respective fixing screw (4) for fixing the preformed element (2) to the device (10),
- said second nut (20) received on said second stem having a supporting surface (22) with respect to the surface (23) of the preformed element (2), suitable for increasing the supporting surface between said preformed element (2) and said supporting device (10).

2. A supporting device (10) for preformed elements (2) for producing single superstructures of dental prostheses anchored to a corresponding implant in the patient's mouth, said device (10) being supportable to a processing machine by means of a respective supporting system (28,35), wherein said supporting device (10) is of the type consisting of a supporting body, comprising an interface (8) for supporting a preformed element (2) with respect to the same supporting body, and a base opposite to said interface (8), wherein said device comprises:
- a shank (11), provided at the base of said device (10) and containing a threaded recess (15) for connection to said supporting system (28,35) of said device to the processing machine of said preformed element (2), and a flange (12) provided at its circular edge with a section (13) of the straight side surface which represents the angular position reference and the lower side (14) of said flange (12) defining the reference in height of the device (10) with respect to the processing point zero on the processing machine;
- a stem (24) for housing an interface (8) identical to that of the implant in the mouth and a washer (26) having said supporting surface (27) with respect to a surface (23) of the preformed element (2) to the above supporting body,
- a nut (25) on the above-mentioned supporting stem to said washer (26),
- said stem (24), for receiving said interface (8) identical to that of the implant in the mouth, having a free end (24) reproducing the form and dimension of said interface (8) of the implant in the mouth, being said stem (24) provided with a hole (18) to receive the respective fixing screw (4) for fixing the preformed element (2) to the device (10),
- said washer (26) received on said stem having a supporting surface (27) with respect to the surface (23) of the preformed element (2), suitable for increasing the supporting surface between said preformed element (2) and said supporting device (10).

3. An assembly comprising a supporting system and a device according to claim 1 or 2, wherein the supporting system comprising at least one housing (30) for said shank (11), in order to support the above supporting body in position on the processing machine of the preformed element (2).

4. The supporting system according to claim 3, **characterized in that** the above-mentioned housing (30) comprises a shoulder (31) suitable for cooperating with said section of straight side surface (13) of the flange (12) for defining the angular orientation of said supporting body on said supporting system (28), the reference for the position in height of the same supporting body with respect to the zero of the processing machine of the preformed element consisting, instead, of the plane (32) of said housing (30) which cooperates with said lower side (14) of the flange (12) of the same supporting body.

5. The supporting system according to claim 4, **characterized in that** it has a screw (33) for anchoring the supporting body to said supporting system (28,35), the latter also being provided with a supporting plane (34) with respect to the respective processing machine of the preformed element.

## Patentansprüche

1. Trägervorrichtung (10) für vorgeformte Elemente (2) zur Erzeugung einzelner Überbauten von Dentalprothesen, die an einem entsprechenden Implantat in dem Mund eines Patienten verankert sind, wobei die Vorrichtung (10) an einer Verarbeitungsmaschine mittels eines jeweiligen Trägersystems (28, 35) getragen werden kann, wobei die Trägervorrichtung (10) vom Typ ist, der aus einem Trägerkörper, der eine Schnittstelle (8) zum Tragen eines vorgeformten Elements (2) in Bezug auf den Trägerkörper umfasst, sowie einer Basis entgegengesetzt der Schnittstelle (8) besteht, wobei die Vorrichtung umfasst:
- einen Schaft (11), der an der Basis der Vorrichtung (10) vorgesehen ist und eine Gewindeausnehmung (15) zur Verbindung mit dem Trägersystem (28, 35) der Vorrichtung an der Verarbeitungsmaschine des vorgeformten Elements (2) enthält, sowie einen Flansch (12), der an seinem kreisförmigen Rand mit einem Abschnitt (13) der geraden Seitenfläche versehen ist, die die Winkelpositionsreferenz repräsentiert, und wobei die untere Seite (14) des Flansches (12) die Referenz bezüglich der Höhe der Vorrichtung (10) in Bezug auf den Verarbeitungspunkt Null an der Verarbeitungsmaschine definiert;
- einen ersten Gewindeschaft (16) zum Aufnehmen einer ersten Mutter (19) und einen zweiten Gewindeschaft (17) zum Aufnehmen einer zweiten Mutter (20), die eine Trägerfläche (22) in Bezug auf eine Fläche (23) des vorgeformten Elements (2) zu dem oberen Trägerkörper aufweist,
- wobei der zweite Gewindeschaft (17) zum Aufnehmen der Schnittstelle (8), die identisch der des Implantats in dem Mund ist, ein freies Ende (17) aufweist, das die Form und Abmessung der Schnittstelle (8) des Implantats in dem Mund repräsentiert, wobei der Schaft (17) mit einem Loch (18) versehen ist, um die jeweilige Fixierschraube (4) zum Fixieren des vorgeformten Elements (2) an der Vorrichtung (10) aufzunehmen,
- wobei die zweite Mutter (20) an dem zweiten Schaft aufgenommen ist, der eine Trägerfläche (22) in Bezug auf die Fläche (23) des vorgeformten Elements (2) aufweist, die zum Erhöhen der Trägerfläche zwischen dem vorgeformten Element (2) und der Trägervorrichtung (10) geeignet ist.

2. Trägervorrichtung (10) für vorgeformte Elemente (2) zum Erzeugen einzelner Überbauten von Dentalprothesen, die in einem entsprechenden Implantat in dem Mund eines Patienten verankert sind, wobei die Vorrichtung (10) an einer Verarbeitungsmaschine mittels eines jeweiligen Trägersystems (28, 35) getragen werden kann, wobei die Trägervorrichtung (10) vom Typ ist, der aus einem Trägerkörper, der eine Schnittstelle (8) zum Tragen eines vorgeformten Elements (2) in Bezug auf den Trägerkörper umfasst, sowie einer Basis entgegengesetzt der Schnittstelle (8) besteht, wobei die Vorrichtung umfasst:
- einen Schaft (11), der an der Basis der Vorrichtung (10) vorgesehen ist und eine Gewindeausnehmung (15) zur Verbindung mit dem Trägersystem (28, 35) der Vorrichtung an der Verarbeitungsmaschine des vorgeformten Elements (2) und einen Flansch (12) enthält, der an seinem kreisförmigen Rand mit einem Abschnitt (13) der geraden Seitenfläche versehen ist, die die Winkelpositionsreferenz repräsentiert, und wobei die untere Seite (14) des Flansches (12) die Referenz in Bezug auf die Höhe der Vorrichtung (10) bezüglich des Verarbeitungspunktes Null an der Verarbeitungsmaschine definiert;
- einen Schaft (24) zum Aufnehmen einer Schnittstelle (8), die identisch zu der des Implantats in dem Mund ist, und einer Beilagscheibe (26), die die Trägerfläche (27) in Bezug auf eine Fläche (23) des vorgeformten Elements (2) zu dem obigen Trägerkörper aufweist,
- eine Mutter (25) an dem Trägerschaft zu der Beilagscheibe (26),
- wobei der Schaft (24) zum Aufnehmen der Schnittstelle (8), die identisch zu der des Implantats in dem Mund ist, ein freies Ende (24) aufweist, das die Form und Abmessung der Schnittstelle (8) des Implantats in dem Mund reproduziert, wobei der Schaft (24) mit einem Loch (18) versehen ist, um die jeweilige Fixierschraube (4) zum Fixieren des vorgeformten Elements (2) an der Vorrichtung (10) aufzunehmen,
- wobei die Beilagscheibe (26), die an dem Schaft aufgenommen ist, eine Trägerfläche (27) in Bezug auf die Fläche (23) des vorgeformten Elements (2) aufweist, die zum Erhöhen der Trägerfläche zwischen dem vorgeformten Element (2) und der Trägervorrichtung (10) geeignet ist.

3. Baugruppe mit einem Trägersystem und einer Vorrichtung nach einem der Ansprüche 1 oder 2,
wobei das Trägersystem zumindest ein Gehäuse (30) für den Schaft (11) aufweist, um den Trägerkörper in Position an der Verarbeitungsmaschine des vorgeformten Elements (2) zu tragen.

4. Trägersystem nach Anspruch 3, **dadurch gekennzeichnet, dass** das Gehäuse (30) eine Schulter (31) umfasst, die zum Zusammenwirken mit dem Teil der geraden Seitenfläche (13) des Flansches (12) zum Definieren der Winkelorientierung des Trägerkörpers an dem Trägersystem (28) geeignet ist, wobei die Referenz für die Position in Bezug auf die Höhe des Trägerkörpers bezüglich der Null der Verarbeitungsmaschine des vorgeformten Elements stattdessen aus der Ebene (32) des Gehäuses (30) besteht, die mit der unteren Seite (14) des Flansches (12) des Trägerkörpers zusammenwirkt.

5. Trägersystem nach Anspruch 4, **dadurch gekennzeichnet, dass** es eine Schraube (33) zum Verankern des Trägerkörpers an dem Trägersystem (28, 35) aufweist, wobei dieses auch mit einer Tragebene (34) in Bezug auf die jeweilige Verarbeitungsmaschine des vorgeformten Elements versehen ist.

## Revendications

1. Dispositif de support (10) d'éléments préformés (2) pour produire des superstructures uniques de prothèses dentaires ancrées sur un implant correspondant dans la bouche d'un patient, ledit dispositif (10) pouvant être supporté sur une machine de traitement au moyen d'un système de support respectif (28, 35), où ledit dispositif de support (10) est du type constitué d'un corps de support, comprenant une interface (8) pour supporter un élément préformé (2) par rapport à ce même corps de support, et une base opposée à ladite interface (8), où ledit dispositif comprend :
- une tige (11), prévue au niveau de la base dudit dispositif (10) et comportant un évidement fileté (15) pour être raccordé audit système de support (28, 35) dudit dispositif sur la machine de traitement dudit élément préformé (2), et une embase (12) munie au niveau de son bord circulaire d'une section (13) de la surface latérale droite qui représente la référence de position angulaire et le côté inférieur (14) de ladite embase (12) définissant la référence en hauteur du dispositif (10) par rapport au point de traitement zéro sur la machine de traitement ;
- une première tige filetée (16) destinée à recevoir un premier écrou (19) et une seconde tige filetée (17) destinée à recevoir un second écrou (20) ayant une surface de support (22) par rapport à une surface (23) de l'élément préformé (2) sur le corps de support mentionné ci-dessus,
- ladite seconde tige filetée (17), destinée à recevoir ladite interface (8) identique à celle de l'implant dans la bouche, ayant une extrémité libre (17) reproduisant la forme et la dimension de ladite interface (8) de l'implant dans la bouche, ladite tige (17) étant munie d'un trou (18) pour recevoir la vis de fixation respective (4) destinée à fixer l'élément préformé (2) sur le dispositif (10),
- ledit second écrou (20) reçu sur ladite seconde tige ayant une surface de support (22) par rapport à la surface (23) de l'élément préformé (2), appropriée pour augmenter la surface de support entre ledit élément préformé (2) et ledit dispositif de support (10).

2. Dispositif de support (10) d'éléments préformés (2) pour produire des superstructures uniques de prothèses dentaires ancrées sur un implant correspondant dans la bouche d'un patient, ledit dispositif (10) pouvant être supporté sur une machine de traitement au moyen d'un système de support respectif (28, 35), où ledit dispositif de support (10) est du type constitué d'un corps de support, comprenant une interface (8) pour supporter un élément préformé (2) par rapport à ce même corps de support, et une base opposée à ladite interface (8), où ledit dispositif comprend :
- une tige (11), prévue au niveau de la base dudit dispositif (10) et comportant un évidement fileté (15) pour être raccordé audit système de support (28, 35) dudit dispositif sur la machine de traitement dudit élément préformé (2), et une embase (12) munie au niveau de son bord circulaire d'une section (13) de la surface latérale droite qui représente la référence de position angulaire et le côté inférieur (14) de ladite embase (12) définissant la référence en hauteur du dispositif (10) par rapport au point de traitement zéro sur la machine de traitement ;
- une tige (24) destinée à loger une interface (8) identique à celle de l'implant dans la bouche et une rondelle (26) ayant ladite surface de support (27) par rapport à une surface (23) de l'élément préformé (2) sur le corps de support mentionné ci-dessus,
- un écrou (25) sur la tige de support mentionnée ci-dessus sur ladite rondelle (26),
- ladite tige (24), destinée à recevoir ladite interface (8) identique à celle de l'implant dans la bouche, ayant une extrémité libre (24) reproduisant la forme et la dimension de ladite interface (8) de l'implant dans la bouche, ladite tige (24) étant munie d'un trou (18) pour recevoir la vis de fixation respective (4) destinée à fixer l'élément préformé (2) sur le dispositif (10),
- ladite rondelle (26) reçue sur ladite tige ayant une surface de support (27) par rapport à la surface (23) de l'élément préformé (2), appropriée pour augmenter la surface de support entre ledit élément préformé (2) et ledit dispositif de support (10).

3. Ensemble comprenant un système de support et un dispositif selon la revendication 1 ou 2, dans lequel le système de support comprend au moins un logement (30) pour ladite tige (11), afin de supporter le corps de support mentionné ci-dessus en position sur la machine de traitement de l'élément préformé (2).

4. Système de support selon la revendication 3, **caractérisé en ce que** le logement mentionné ci-dessus (30) comprend un épaulement (31) adapté pour coopérer avec ladite section de la surface latérale droite (13) de l'embase (12) pour définir l'orientation angulaire dudit corps de support sur ledit système de support (28), la référence pour la position en hauteur de ce même corps de support par rapport au point zéro de la machine de traitement de l'élément préformé constitué, à la place, du plan (32) dudit logement (30) qui coopère avec ledit côté inférieur (14) de l'embase (12) de ce même corps de support.

5. Système de support selon la revendication 4, **caractérisé en ce qu'**il comprend une vis (33) pour ancrer le corps de support sur ledit système de support (28, 35), ce dernier étant également muni d'un plan de support (34) par rapport à la machine de traitement respective de l'élément préformé.
